# FASCICULE DE BREVET EUROPEEN

(11) **EP 4 232 320 B1**
(45) Date de publication et mention de la délivrance du brevet: **09.10.2024**
(21) Numéro de dépôt: 21807196.7
(22) Date de dépôt: 21.10.2021
(51) Int. Cl.: B60N 2/879, B60N 2/885, B60R 11/02, B60R 11/00

(54) **APPUI-TETE SONORISE ET SIEGE ASSOCIE**
KOPFSTÜTZE MIT SOUNDSYSTEM UND ZUGEHÖRIGEM SITZ
HEADREST WITH SOUND SYSTEM AND ASSOCIATED SEAT

(30) Priorité: 22.10.2020 FR 2010836
(43) Date de publication de la demande: 30.08.2023
(73) Titulaire: FOCAL JMLab, 42350 La Talaudière (FR)
(72) Inventeur: GUADAGNIN, Léo, 42400 Saint Chamond (FR); CAZES BOUCHET, Arnaud, 42510 Balbigny (FR)
(74) Mandataire: Cabinet Laurent & Charras
(86) Numéro de dépôt international: PCT/FR2021/051850
(87) Numéro de publication internationale: WO 2022/084636

(56) Documents cités:
- EP-A1- 2 910 429
- CA-A1- 2 928 995
- US-A1- 2014 284 976
- US-A1- 2017 156 503

## Description

### DOMAINE TECHNIQUE

L'invention se rapporte au domaine des appui-têtes sonorisés, c'est-à-dire des appui-têtes intégrant un ou plusieurs haut-parleurs afin de diffuser des sons pour une personne assise sur le siège sur lequel l'appui-tête est monté.

L'invention peut être utilisée pour un grand nombre de domaines techniques pour lesquels il est recherché de sonoriser une place assise en formant une bulle sonore autour de la personne assise sur le siège de sorte à diffuser des contenus différents d'un passager à l'autre sans incommoder les voisins.

Par exemple, l'invention peut être utilisée pour les sièges d'avion afin qu'un passager puisse écouter une musique ou un film sans casque et sans incommoder ses voisins.

Pour un autre exemple, l'invention peut être utilisée dans une voiture afin de diffuser des sons distincts pour les passagers ou le conducteur.

### TECHNIQUES ANTERIEURES

Dans un avion, des contenus sonores sont proposés aux passagers afin de les informer et/ou de les divertir au cours du vol. Les passagers ont désormais la possibilité de choisir le contenu sonore qu'ils souhaitent écouter, par exemple un film ou une musique. Pour éviter d'incommoder les passagers voisins en écoutant un contenu sonore, il est classiquement nécessaire d'utiliser des écouteurs branchés sur un accoudoir du siège de chaque passager. Cependant, les écouteurs sont souvent inconfortables et la qualité du son n'est pas souvent optimale. Il est donc recherché de pouvoir diffuser des sons au moyen de haut-parleurs intégrés directement dans l'appui-tête des passagers, sans incommoder les passagers voisins, c'est-à-dire en formant une bulle sonore autour de chaque passager.

Pour ce faire, le document EP 2858900 propose un appui-tête sonorisé comportant une zone centrale pourvue d'une mousse de sorte à recevoir l'arrière de la tête d'un utilisateur. De part et d'autre de cette zone centrale, des zones latérales sont montées en rotation sur des charnières de sorte que chaque zone latérale puisse être déplacée sensiblement en regard d'une oreille de l'utilisateur. Chaque zone latérale est pourvue d'un haut-parleur apte à générer des sons au plus proche des oreilles de l'utilisateur afin de limiter le volume sonore couvert et ainsi, limiter les nuisances sonores pour les passagers voisins. Dans d'autres applications, par exemple pour des sièges de voitures, les zones latérales sont fixes par rapport à la zone centrale.

Dans tous les cas, compte tenu de la faible surface disponible pour intégrer ces haut-parleurs dans les zones latérales, ces haut-parleurs doivent présenter des membranes de faibles dimensions.

Des solutions consistant à disposer des haut-parleurs au plus près des oreilles de l'utilisateur sont également décrites dans les documents US2017/156503A1, JP2005027019, US6744898 et KR 1 0051 0294. Cependant, ces solutions sont particulièrement sensibles à la position de la tête de l'utilisateur et elles ne fonctionnent efficacement que si les oreilles de l'utilisateur sont précisément positionnées en regard des haut-parleurs, de sorte que le volume sonore émis par ces haut-parleurs peut être réduit au maximum afin de limiter l'impact sonore environnemental pour les voisins.

Or, la morphologie des utilisateurs peut être très variable et ces dispositifs sont configurés pour fonctionner efficacement pour une taille moyenne d'utilisateurs. Ainsi, les utilisateurs de grande taille ou de petite taille ne peuvent pas utiliser ce système sans devoir amplifier au maximum les sons émis, ce qui génère de la pollution sonore pour les voisins et provoque des très fortes variations du niveau sonore perçu par l'utilisateur lors de ses mouvements de tête.

En outre, dans ces solutions, les haut-parleurs intégrés dans les zones latérales doivent être à large bande. Pour obtenir une meilleure qualité sonore, il est préférable d'utiliser plusieurs haut-parleurs spécialisés pour des plages de fréquences distinctes, par exemple un haut-parleur de grave et plusieurs haut-parleurs pour les fréquences médium et aigu.

Avec la faible surface disponible dans les zones latérales, les haut-parleurs utilisés présentent généralement une gamme de fréquence de préférence comprise entre 80Hz-400Hz et 8kHz-20kHz ; alors que les fréquences audibles s'étendent entre 20Hz et 20kHz pour la moyenne des utilisateurs.

Pour restituer les fréquences graves au niveau d'un siège, le document WO2006/109389 propose de coupler deux haut-parleurs mediums/aigus disposés proches des oreilles de l'utilisateur avec un haut-parleur de grave disposé sous le siège. Ainsi, le spectre de fréquences des sons générés pour l'utilisateur est découpé pour que la partie grave du son soit uniquement générée par le haut-parleur de grave et la partie médium/aigu du son soit uniquement générée par les haut-parleurs mediums/aigus, proches des oreilles de l'utilisateur.

Pour atteindre les oreilles de l'utilisateur avec le haut-parleur de grave disposé sous le siège, celui-ci doit classiquement être intégré dans un caisson de sorte à obtenir un haut-parleur monodirectionnel. En effet, la présence d'un caisson permet de favoriser les ondes sonores formées au niveau de la face avant de la membrane.

Cependant, compte tenu des grandes longueurs d'onde vis-à-vis de la compacité des caissons de grave, la formation des ondes sonores uniquement vers la face avant de la membrane d'un haut-parleur de grave n'est que faiblement directive, si bien que les fréquences graves du haut-parleur de grave du document WO2006/109389 génèrent des perturbations importantes pour les voisins avant d'arriver à l'oreille de l'utilisateur.

Le problème technique que se propose de résoudre l'invention est d'obtenir un appui-tête sonorisé avec une restitution sonore efficace en basses-fréquences tout en minimisant l'impact sonore environnemental.

### EXPOSE DE L'INVENTION

Pour répondre à ce problème technique, l'invention propose d'intégrer dans l'appui-tête au moins un haut-parleur de grave, associé à une partie arrière ouverte et au moins un haut-parleur medium-aigu, associé à une partie arrière fermée.

Ainsi, dans le cas du haut-parleur de grave, l'onde acoustique arrière générée par le déplacement de la membrane interfère avec l'onde acoustique avant. Le haut-parleur de grave présente, ainsi, un comportement monopolaire en champ proche et un comportement dipolaire en champ lointain.

En effet, en champ lointain, c'est-à-dire au-delà de 20cm du haut-parleur de grave, les interférences entre les ondes provenant de l'avant et de l'arrière du haut-parleur agissent comme un filtre passe-haut réduisant le niveau sonore en basse fréquence devant et derrière le haut-parleur de grave.

Du fait de l'équidistance entre les sons émis de la face avant et de la face arrière du haut-parleur de grave, les sons perçus sur les côtés du haut-parleur de grave sont fortement atténués et le haut-parleur de grave est considéré comme bidirectionnel.

En disposant le haut-parleur de grave directement derrière la tête de l'utilisateur, les oreilles de l'utilisateur sont localisées en champ proche du haut-parleur de grave et il est possible de restituer des sons graves sans émettre une pollution sonore importante pour les voisins placés sur les côtés ainsi que devant et derrière le passager, à plus de 20 ou 30 cm.

A cet effet, selon un premier aspect, l'invention concerne un appui-tête sonorisé comportant :
- au moins un haut-parleur de grave associé à une partie arrière ouverte, comportant une grille et/ou une mousse arrière, à cellules ouvertes ou semi-ouvertes, présentant une densité comprise entre 8 et 60 kg/m³, de sorte que ledit au moins un haut-parleur de grave soit bidirectionnel ; et
- au moins un haut-parleur médium/aigu, associé à une partie arrière fermée comportant une paroi pleine et/ou une mousse à cellules fermées de sorte que ledit au moins un haut-parleur médium/aigu soit monodirectionnel.

Au sens de l'invention, un haut-parleur monodirectionnel correspond à un haut-parleur émettant une onde sonore dans une direction privilégiée. Cette caractéristique est obtenue en utilisant la directivité naturelle des transducteurs.

Au sens de l'invention, une paroi pleine correspond à une paroi arrière qui ne présente pas d'ouverture dans la partie disposée en regard du haut-parleur.

L'invention permet d'obtenir une restitution sonore efficace pour l'ensemble du spectre sonore audible par l'oreille humaine. Les basses-fréquences sont restituées au moyen d'au moins un haut-parleur de grave et les moyennes et hautes fréquences sont restituées aux moyens des haut-parleurs médium/aigu. Les haut-parleurs sont répartis dans l'appui-tête de sorte que le son perçu par l'utilisateur corresponde à la somme des spectres sonores générés par les différents haut-parleurs de grave et médium-aigu, tout en limitant les phénomènes d'interférence. En outre, l'invention propose un système sonore particulièrement compact puisque tous les haut-parleurs sont intégrés dans l'espace réduit d'un appui-tête.

L'invention limite également l'impact sonore environnemental car le haut-parleur de grave est configuré pour présenter un comportement bidirectionnel en champ lointain, favorisant l'atténuation du son pour les voisins placés sur les côtés ainsi que devant et derrière le passager et les haut-parleurs médium/aigu sont monodirectionnels, dirigés vers l'oreille de l'utilisateur.

En pratique, l'appui-tête comporte :
- une zone centrale destinée à recevoir l'appui de l'arrière de la tête d'un utilisateur ; ladite zone centrale présentant une partie avant, comportant ledit au moins un haut-parleur de grave recouvert par au moins une couche de mousse avant ; et
- deux zones latérales disposées de part et d'autre de ladite zone centrale ; chaque zone latérale intégrant ledit au moins un haut-parleur médium/aigu.

Selon un mode de réalisation préférentiel, lesdites zones latérales sont montées de part et d'autre de ladite zone centrale aux moyens de charnières de sorte que lesdits zones latérales soient orientables angulairement par rapport à ladite zone centrale.

Le nombre de haut-parleurs peut varier en fonction des applications. Par exemple, la zone centrale peut intégrer un ou deux haut-parleurs de grave en fonction de la surface disponible et de la taille des haut-parleurs utilisés.

De la même manière, l'appui-tête intègre un réseau d'au moins deux haut-parleurs médium/aigu espacés d'une distance inférieure à la moitié du maximum des longueurs d'ondes générées par lesdits au moins deux haut-parleurs médium/aigu de sorte à obtenir des interférences constructives entre lesdits au moins deux haut-parleurs médium/aigu et former une onde sonore sensiblement cylindrique parvenant jusqu'à la tête de l'utilisateur.

Au sens de l'invention, la distance entre deux haut-parleurs est définie comme la distance mesurée entre les centres des membranes de chaque haut-parleur.

En particulier, la distance entre les haut-parleurs médium/aigu est réglée pour que le couplage soit optimal entre 2 et 4 kHz. Ce mode de réalisation propose d'utiliser les propriétés des interférences constructives des haut-parleurs pour former une onde sonore sensiblement cylindrique.

L'ensemble des interférences constructives et destructives sont connues sous l'appellation « line array ». Elles permettent d'augmenter la directivité des sons émis par les haut-parleurs médium/aigu selon un axe perpendiculaire aux haut-parleurs médium/aigu. Le son résultant est donc limité à l'espace formé par le « line array » et nettement atténué dans les autres régions de l'appui-tête.

En outre, la formation d'une onde sonore sensiblement cylindrique permet de maintenir l'équilibre tonal sur toute la hauteur de l'appui-tête, de sorte à pouvoir maintenir la même qualité de son suivant les différentes positions de la tête de l'utilisateur le long de l'appui-tête et suivant les mouvements vers l'avant et l'arrière de la tête.

Ainsi, avec ce mode de réalisation, l'appui-tête est moins sensible aux mouvements de l'utilisateur que les systèmes de l'état de la technique.

L'intégration du haut-parleur de grave derrière la tête de l'utilisateur ne doit pas être effectuée au mépris du confort de l'utilisateur. Pour ce faire, le haut-parleur de grave est recouvert par une couche de mousse. Par exemple, cette couche de mousse avant peut correspondre à une mousse à mémoire de forme.

De la même manière, ledit au moins un haut-parleur médium/aigu est recouvert par au moins une couche de mousse avant.

Pour garantir la transmission des ondes sonores à travers la mousse, lesdites au moins une couche mousse avant de ladite zone centrale et desdites zones latérales comportent :
- une couche de mousse primaire présentant des évidements ménagés en regard desdits haut-parleurs ; et
- une couche de mousse secondaire, disposée au-dessus de ladite couche de mousse primaire.

La mousse primaire permet de régler la distance entre les haut-parleurs et l'extrémité avant de l'appui-tête alors que la mousse secondaire, préférentiellement de plus faible épaisseur, permet d'homogénéiser la surface de l'appui-tête et de cacher les évidements tout en garantissant le confort.

La taille des évidements de la couche de mousse primaire peut être adaptée à la taille des membranes.

Ainsi, un évidement peut être centré sur chaque haut-parleur médium/aigu de sorte que seule la couche de mousse secondaire limite la propagation des sons émis par les haut-parleurs médiums/aigus. De préférence, cette couche de mousse secondaire présente une densité plus faible que celle de la couche de mousse primaire.

Lorsque le haut-parleur de grave est installé dans la partie centrale de l'appui-tête, il est plus compliqué de former un évidement de la taille du haut-parleur de grave car la membrane présente une surface plus importante et que les sons générés par le haut-parleur de grave peuvent dégrader le confort de l'utilisateur.

De préférence, ladite couche de mousse primaire de ladite zone centrale présente des évidements disposés en périphérie dudit au moins un haut-parleur de grave.

Ainsi, une partie de la couche de mousse primaire disposée en regard du haut-parleur de grave a pour fonction de limiter les vibrations au niveau de la tête de l'utilisateur et de garantir un maintien efficace de la tête de l'utilisateur.

En outre, la répartition des sons entre les haut-parleurs médium/aigu et le haut-parleur de grave peut être définie en fonction des caractéristiques techniques des différents haut-parleurs. De préférence, ledit au moins un haut-parleur de grave est commandé pour diffuser des sons dans une plage de fréquence dont la borne supérieure est comprise entre 80 et 800 Hz, avantageusement au maximum de 400Hz. Dans ce cas, ledit au moins un haut-parleur médium/aigu de chaque zone latérale est commandé pour diffuser des sons dans une plage de fréquence supérieure ou égale à ladite borne supérieure, par exemple une plage de fréquences dont la borne inférieure est de 400Hz.

Ce mode de réalisation est issu d'une observation selon laquelle les sons générés par les haut-parleurs médium/aigu en dessous de 400Hz sont peu directifs, même avec les interférences destructives. Ainsi, il est préférable de commander les haut-parleurs médium/aigu pour émettre des sons uniquement au-dessus de 300 Hz pour minimiser l'impact sonore environnemental. En outre, la génération de son au-dessus de 300 Hz par un haut-parleur de grave est souvent problématique.

Selon un second mode de réalisation, l'invention concerne un siège de voiture, de train, d'avion ou siège multimédia comportant :
- une assise ;
- un dossier ;
- un appui-tête sonorisé, selon le premier aspect de l'invention, monté sur ledit dossier ; et
- un organe de répartition du signal audio entre ledit au moins un haut-parleur de grave et ledit au moins un haut-parleur médium/aigu dudit appui-tête sonorisé.

Au sens de l'invention, un « siège multimédia » est un siège de bureau destiné à la pratique des jeux vidéoludiques et intégrant des haut-parleurs pour assurer l'immersion du joueur.

Ainsi, la répartition du son peut être commandée par un organe dédié, par exemple intégré dans le siège. Cet organe de répartition peut réaliser une répartition constante ou variable en fonction d'un ou plusieurs capteurs. Par exemple, un capteur peut détecter la position de la tête de l'utilisateur au cours du temps de sorte à adapter la répartition du son si l'utilisateur positionne sa tête sur une zone latérale au lieu de la positionner sur la zone centrale. De même, l'organe de répartition du son peut automatiquement couper le son lorsque le passager quitte son siège.

De préférence, ledit appui-tête sonorisé comportant plusieurs haut-parleurs médium/aigu, ledit organe de répartition du signal audio est configuré pour appliquer un délai temporel entre au moins deux haut-parleurs médium/aigu de sorte à orienter le son global dans la direction des oreilles dudit utilisateur. Ce délai temporel permet d'orienter le faisceau sonore en direction des oreilles de l'utilisateur. Il peut être réalisé mécaniquement par la disposition des différents haut-parleurs ou numériquement par l'organe de répartition.

### DESCRIPTION DES FIGURES

La manière de réaliser l'invention, ainsi que les avantages qui en découlent, ressortiront bien de la description des modes de réalisation qui suivent, à l'appui des figures annexées dans lesquelles :
[Fig1] La figure 1 est une représentation schématique de face d'un appui-tête selon un premier mode de réalisation de l'invention ;
[Fig2] La figure 2 est une représentation schématique de face d'un appui-tête selon un deuxième mode de réalisation de l'invention ;
[Fig3] La figure 3 est une représentation schématique de face d'un appui-tête selon un troisième mode de réalisation de l'invention ;
[Fig4] La figure 4 est une représentation schématique de face d'un appui-tête selon un quatrième mode de réalisation de l'invention ;
[Fig5] La figure 5 est une représentation schématique de face d'un appui-tête selon un cinquième mode de réalisation de l'invention ;
[Fig6] La figure 6 est une représentation schématique de face d'un appui-tête selon un sixième mode de réalisation de l'invention ;
[Fig7] La figure 7 est une représentation schématique d'une première stratégie de positionnement des haut-parleurs de l'appui-tête de la figure 3 ;
[Fig8] La figure 8 est une représentation schématique d'une seconde stratégie de positionnement des haut-parleurs de l'appui-tête de la figure 3 ;
[Fig9] La figure 9 est une représentation schématique en coupe de l'appui-tête de la figure 1 selon un premier mode de réalisation de la partie arrière ouverte ;
[Fig10] La figure 10 est une représentation schématique en coupe de l'appui-tête de la figure 1 selon un second mode de réalisation de la partie arrière ouverte ;
[Fig11] La figure 11 est une représentation schématique en coupe de l'appui-tête de la figure 1 selon un troisième mode de réalisation de la partie arrière ouverte ;
[Fig12] La figure 12 est une représentation schématique de dessus de la couche de mousse primaire de l'appui-tête de la figure 1 ;
[Fig13] La figure 13 est une représentation des ondes sonores générées par un seul haut-parleur ;
[Fig14] La figure 14 est une représentation des ondes sonores générées par un réseau de plusieurs haut-parleurs ; et
[Fig 15] La figure 15 est une comparaison de l'évolution de l'atténuation de l'intensité sonore en fonction de la distance pour un unique haut-parleur et un réseau de plusieurs haut-parleurs.

### DESCRIPTION DETAILLEE DE L'INVENTION

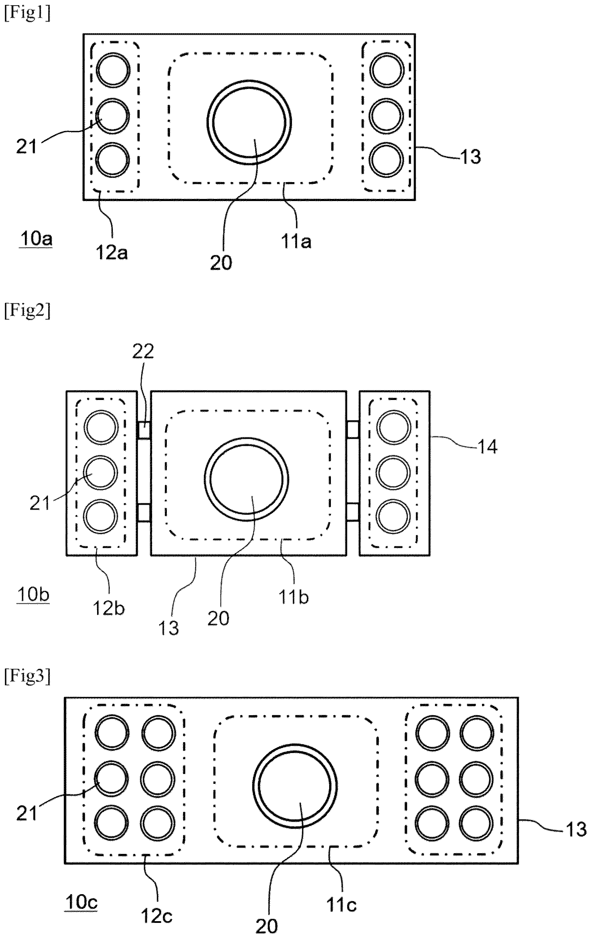

Tel qu'illustré sur les figures 1 à 6, un appui-tête **10a-10f** comporte au moins une structure centrale **13** destinée à recevoir l'arrière de la tête d'un utilisateur. En plus de cette structure centrale **13,** un appui-tête **10a-10f** peut comporter des bords latéraux **14,** mobiles ou non, destinés à soutenir la tête **15** de l'utilisateur si celui-ci déplace sa tête **15** sur un côté ou l'autre de l'appui-tête **10a-10f.**

Par exemple, la structure centrale **13** peut présenter une forme parallélépipédique avec une hauteur comprise entre 15 et 30 cm, une largeur comprise entre 20 et 50 cm et une épaisseur comprise entre 5 et 20 cm.

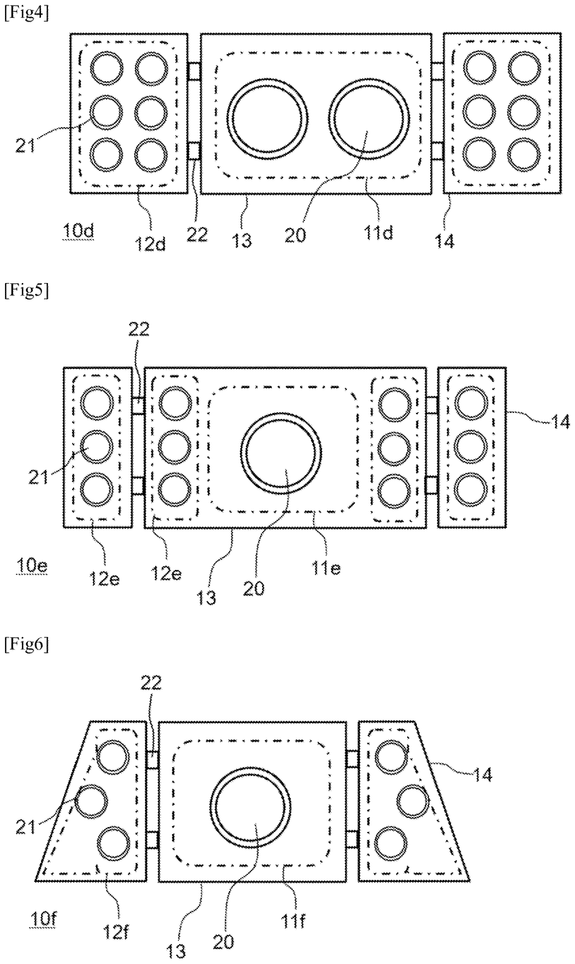

Les bords latéraux **14** sont montés de part et d'autre de la structure centrale **13** par le biais de charnières **22** permettant d'orienter angulairement la position des bords latéraux **14.** Par exemple, les bords latéraux **14** présentent une hauteur comprise entre 15 et 30 cm, une largeur comprise entre 5 et 15 cm et une épaisseur comprise entre 5 et 20 cm. La forme des bords latéraux **14** peut être parallélépipédique, triangulaire ou ovale sans changer l'invention. Par exemple, sur les figures 2, 4 et 5, les bords latéraux **14** présentent une forme rectangulaire alors que sur la figure 6, les bords latéraux **14** présentent une forme trapèze rectangle.

L'invention concerne l'intégration de haut-parleurs **20-21** dans un appui-tête **10a-10f.** Tel qu'illustré sur les figures 1 à 6, ces haut-parleurs **20-21** peuvent être intégrés dans la structure centrale **13** et/ou les bords latéraux **14.** Par exemple, tous les haut-parleurs **20-21** peuvent être intégrés dans la structure centrale **13,** tel qu'illustré sur les figures 1 et 3. En variante, tous les haut-parleurs **20-21** peuvent être intégrés dans les bords latéraux **14** (mode de réalisation non illustré) ou les haut-parleurs **20-21** peuvent être répartis entre la structure centrale **13** et les bords latéraux **14,** tel qu'illustré sur les figures 2 et 4 à 6.

De préférence, la structure centrale **13** comporte une zone centrale **11a-11f** destinée à accueillir au moins un haut-parleur de grave **20.**

Cette zone centrale **11a-11f** est positionnée sensiblement au centre de la structure centrale **13,** proche de la région où la tête **15** d'un utilisateur moyen est positionnée.

En pratique, plusieurs haut-parleurs de grave **20** peuvent être disposés au niveau de la zone centrale **11a-11f.** La figure 4 illustre un mode de réalisation dans lequel deux haut-parleurs de grave **20** sont positionnés de manière équidistante du milieu de la zone centrale **11d.** Ce mode de réalisation permet de positionner un haut-parleur de grave **20** à proximité de chaque oreille de l'utilisateur.

L'appui-tête **10a-10f** comporte également au moins une zone latérale **12a-12f** destinée à accueillir au moins un haut-parleur médium/aigu **21.** Cette zone latérale **12a-12f** peut être disposée au niveau de la structure centrale **13** et/ou des bords latéraux **14.** De préférence, l'appui-tête **10a-10f** comporte deux zones latérales **12a-12f** disposées de part et d'autre de la zone centrale **11a-11f,** proches des régions où les oreilles de l'utilisateur moyen sont positionnées.

Plus précisément, dans le cas des figures 1 et 3, les zones latérales **12a, 12e** sont disposées de part et d'autre d'une zone centrale **11a, 11c.** De plus, la zone centrale **11a, 11c** et les zones latérales **12a, 12e** sont intégrées dans une unique structure centrale **13.**

Dans le cas des figures 2, 4 et 6, les zones latérales **12b, 12d, 12f** sont uniquement disposées sur les bords latéraux **14.** Ainsi, seule la zone centrale **11b, 11d, 11f** est disposée dans la structure centrale **13.**

Dans le cas de la figure 5, les zones latérales **12e** sont réparties entre les bords latéraux **14** et la structure centrale **13.**

Les figures 1 et 2 illustrent un mode de réalisation dans lequel les zones latérale **12a-12b** comportent trois haut-parleurs médium/aigu **21** alignés en colonne, espacés les uns des autres d'une distance comprise entre 3 et 10 cm.

En variante, la figure 6 illustre un mode de réalisation dans lequel les trois haut-parleurs de chaque zone latérale **12f** médium/aigu **21** sont disposés en quinconce.

Sur les figures 3 à 4, les zones latérales **12c-12d** comportent deux colonnes de trois haut-parleurs médium/aigu **21** alignés. La figure 5 illustre un mode de réalisation dans lequel les zones latérales **12e** comportent deux colonnes de trois haut-parleurs médium/aigu **21,** répartis entre les bords latéraux **14** et la structure centrale **13.**

En effet, dans ce mode de réalisation de la figure 5, une première colonne de trois haut-parleurs médium/aigu **21** est présente sur la structure centrale **13,** de part et d'autre de la zone centrale **11e** et une seconde colonne de trois haut-parleurs médium/aigu **21** est présente sur chaque bord latéral **14.**

De préférence, les haut-parleurs médium/aigu **21** sont espacés d'une distance inférieure à la demi-longueur d'onde correspondant à la fréquence la plus élevée atteinte par les haut-parleurs médium-aigu **21.**

Ainsi, le nombre et la disposition des haut-parleurs médium-aigus permet de former un « line-array », c'est-à-dire un système sonore permettant d'obtenir une onde cylindrique et directive. Une telle onde peut être orientée vers les oreilles de l'utilisateur de sorte que celui-ci puisse percevoir le son avec un niveau sonore et une qualité suffisante, sans pour autant que les voisins ne soient gênés. Par ailleurs, il est également possible de former une onde cylindrique en utilisant un haut-parleur médium/aigu **21** présentant une membrane rectangulaire ou ovaloïde.

En particulier, plus le nombre de haut-parleurs médium/aigu **21** est important, plus l'onde sonore cylindrique résultante est directive.

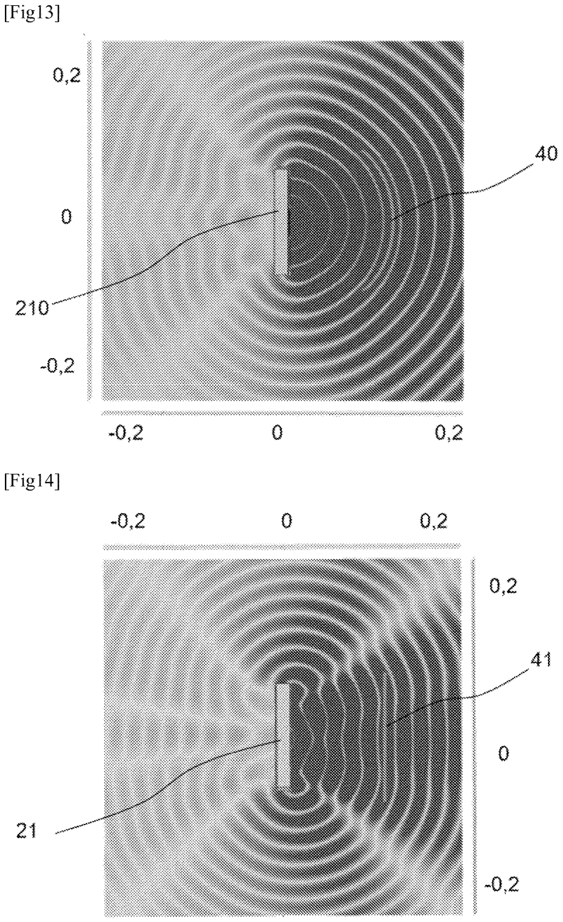

Tel qu'illustré sur la figure 13, lorsqu'un unique haut-parleur médium-aigu **210** est utilisé, l'onde sonore résultante présente un front d'onde sphérique **40.** Ce type d'onde est peu directif, c'est-à-dire que le son se propage dans toutes les directions et en particulier en direction des voisins de l'utilisateur.

La figure 14 illustre l'onde cylindrique générée par un « line array ». Cette dernière présente un front d'onde plan **41.** Ce type d'onde est beaucoup plus directif, c'est-à-dire que l'intensité sonore dépend de la direction. Il apparait donc possible d'orienter les haut-parleurs pour que le maximum d'intensité sonore soit reçu par l'utilisateur et le minimum par les voisins.

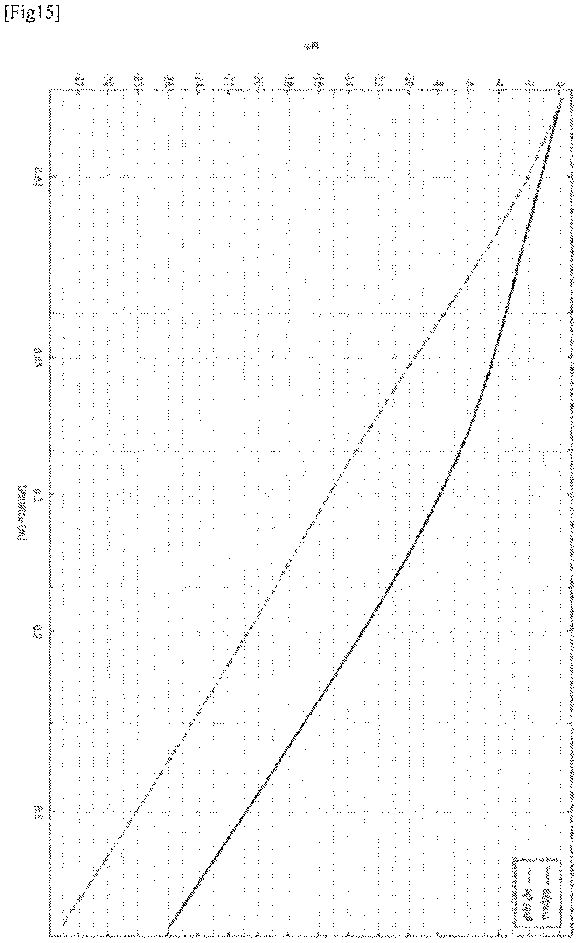

De plus, la figure 15 révèle que, dans le cas d'un unique haut-parleur médium-aigu **210,** l'intensité sonore diminue avec la distance par rapport au haut-parleur médium-aigu **210.** En effet, en champ proche, typiquement entre 0 à 2cm du haut-parleur, l'intensité sonore diminue de 3dB chaque fois que la distance avec le haut-parleur est doublée et en champ lointain, typiquement à partir de 2cm du haut-parleur, l'intensité sonore diminue de 6dB chaque fois que la distance avec le haut-parleur est doublée.

Par conséquent, plus l'utilisateur éloigne son oreille de la position optimale en face du haut-parleur médium-aigu **210,** plus le son est atténué. Ainsi, un faible déplacement de la tête **15** d'un utilisateur peut grandement diminuer la qualité du son.

En revanche, lorsqu'un réseau de plusieurs haut-parleurs médium-aigu **21** est utilisé, l'intensité sonore est sensiblement constante sur une distance de 10 cm en s'éloignant du haut-parleur. Ainsi, lorsque l'utilisateur bouge sa tête **15,** la qualité et l'intensité du son reste globalement identique. De même, la disposition des haut-parleurs medium-aigus en « line array » permet également de conserver la même intensité sonore sur une hauteur comprise entre 10 et 25 cm, le long de l'appui-tête. Par conséquent, tous les l'utilisateurs, peu importe leurs tailles, pourront prétendre à une qualité de son sensiblement constante.

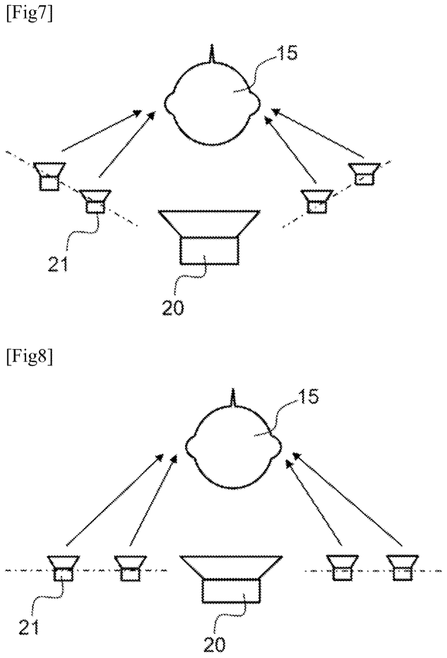

L'utilisation d'un « line array » induit que l'onde sonore se propage vers l'avant, ce qui ne correspond pas forcément à la direction des oreilles de l'utilisateur. Il est donc préférable d'orienter l'onde sonore en direction des oreilles de l'utilisateur. Par exemple, l'ajout d'un délai spatial ou temporel permet de changer la direction de l'onde sonore et de l'orienter vers les oreilles de l'utilisateur. Les figures 7 et 8, illustrent deux modes de réalisation permettant d'obtenir cette orientation de l'onde sonore.

La première solution consiste à orienter mécaniquement les haut-parleurs médium-aigu **21.** Par exemple, si les haut-parleurs médium-aigu **21** sont disposés sur les bords latéraux **14,** l'utilisateur peut orienter les bords latéraux **14** en regard de ses oreilles. En variante, les bords latéraux **14** peuvent être orientés dans la direction opposée à celle des oreilles.

Lorsqu'il est impossible d'orienter mécaniquement les bords latéraux **14,** par exemple dans le cas d'un appui-tête **10a, 10c** sans bords latéraux **14,** la seconde solution consiste à appliquer un retard temporel sur les ondes provenant des haut-parleurs médium-aigu **21.** Cette solution nécessite donc qu'un traitement soit effectué sur le son. La distance à parcourir par l'onde sonore pour chaque haut-parleur medium-aigu **21** peut être estimée à l'aide d'une caméra ou d'un capteur infra-rouge de sorte à détecter la position de la tête de l'utilisateur sur l'appui-tête **10a-10f** et adapter le délai temporel nécessaire entre les différents haut-parleurs médium-aigu **21.**

Une solution hybride consiste à combiner les deux solutions précédentes, c'est-à-dire à donner une orientation prédéfinie aux haut-parleurs médium-aigu **21** et à ajouter des retards temporels sur les ondes provenant des haut-parleurs médium-aigu **21** pour optimiser la directivité si l'angle d'orientation des haut-parleurs médium-aigu **21** ne peut pas être parfaitement ajusté. Les retards temporels peuvent alors être prédéfinis ou encore être ajustés en temps réel grâce à la présence d'un capteur de position ou de suivi de la tête, connaissant l'angle d'orientation des haut-parleurs médium-aigu **21.**

En variante, il est également possible de régler la directivité du faisceau sonore des haut-parleurs médium-aigu **21** en adaptant le gain d'entrée de chaque haut-parleurs médium-aigu **21** constitutif du réseau.

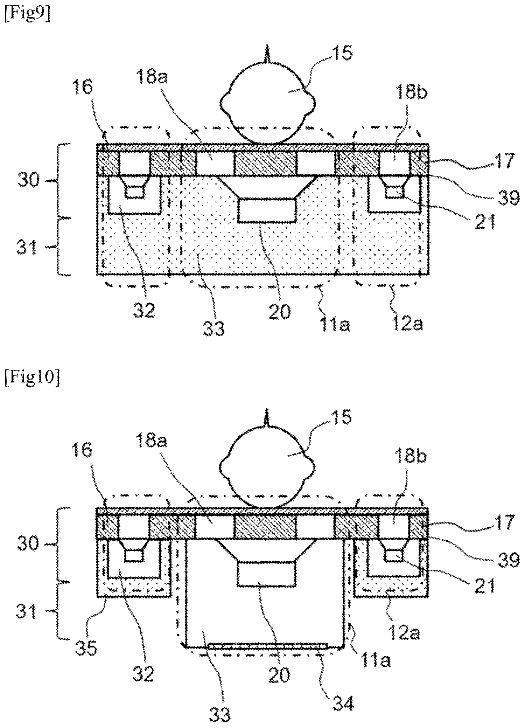

Tel qu'illustré sur les figures 9 à 12, l'appui-tête **10a-10f** comporte au moins une plaque de fixation **39** destinée à supporter les haut-parleurs **20-21.** La plaque de fixation **39** est de même section que la structure centrale **13** et/ou les bords latéraux **14.** Elle peut être réalisée en plastique, en métal, en bois ou tout autre matériaux rigide apte à supporter le poids des haut-parleurs **20-21.**

La plaque de fixation **39** présente des ouvertures permettant de fixer la face avant des haut-parleurs **20-21** et de les intégrer dans la structure de l'appui-tête **10a-10f.** Les haut-parleurs **20-21** sont également associés à une charge acoustique qui dépend du type et de la fréquence de travail des haut-parleurs **20-21.**

Un haut-parleur **20-21** est classiquement formé d'une membrane déplacée par un moteur magnétique. Une partie statique du moteur magnétique est fixée sur une partie arrière d'un châssis. La membrane est fixée sur la partie avant du châssis au moyen d'une suspension annulaire montée entre la partie avant du châssis et le bord externe de la membrane. Pour fixer un haut-parleur **20-21,** cette partie avant du châssis peut être fixée sur la plaque de fixation **39,** par exemple par collage, rivetage ou vissage.

A titre d'exemple, un haut-parleur de grave **20** peut présenter une membrane avec un diamètre compris entre 7 et 15 cm de sorte à produire des sons dans une gamme de fréquences comprises entre 2 et 400 Hz alors qu'un haut-parleur medium-aigu **21** peut présenter une membrane avec un diamètre compris entre 0.5 et 10 cm, de préférence entre 0,5 et 5 cm, de sorte à produire des sons dans une gamme de fréquences comprises entre 300 et 40 000 Hz.

En variante, la membrane peut correspondre à un support rigide ou une mousse à cellules fermées d'une épaisseur comprise entre 0.1 mm et 5 cm, pouvant couvrir tout ou partie de la zone centrale **11a-11f.** Le support rigide ou la mousse à cellules fermées (non poreuse) peut être mis en mouvement par un excitateur de surface positionné à l'arrière du support rigide. Les vibrations du support génèrent ainsi un son. En pratique, le support associé à partie arrière ouverte **31** permet également de former un haut-parleur de grave **20** bidirectionnel.

La partie arrière **31** de l'appui-tête **10a-10f** correspond au volume qui s'étend depuis le moteur magnétique des haut-parleurs **20-21** dans la direction opposée à la position de la tête **15** de l'utilisateur. La partie avant **30** englobe la membrane, le moteur magnétique et s'étend dans la direction de la tête **15** de l'utilisateur.

Pour obtenir une partie arrière **31** ouverte pour l'au moins un haut-parleur de grave **20,** la partie arrière **31** doit comporter au moins une ouverture située en regard du haut-parleur de grave **20** permettant à l'onde sonore de se propager vers l'arrière du haut-parleur de grave **20.**

Pour obtenir cette partie arrière **31** ouverte, l'invention propose d'utiliser une mousse **33** à cellules ouvertes ou semi-ouvertes et/ou un caisson ouvert par une grille **34.**

Tel qu'illustré sur la figure 9, la partie arrière **31** peut comporter uniquement une mousse **33** à cellules ouvertes ou semi-ouvertes pour former la partie arrière de l'appui-tête. Ainsi, la partie arrière **31** est ouverte et laisse l'onde sonore formée en direction de la partie arrière du haut-parleur de grave **20** se propager.

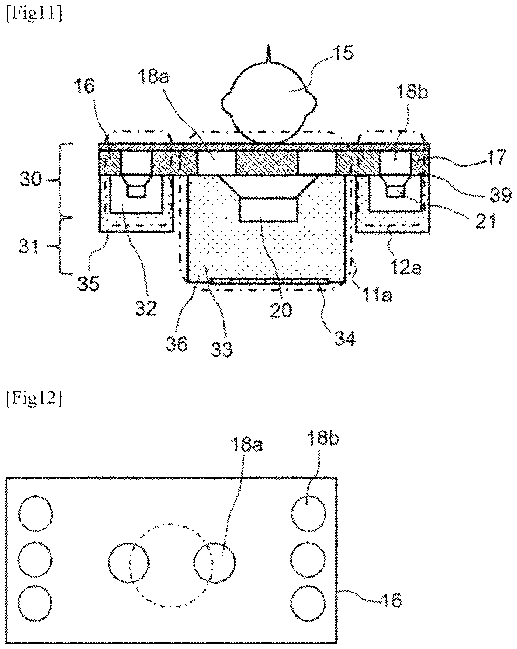

Tel qu'illustré sur les figures 10 et 11, le châssis de l'appui-tête **10a-10f** peut s'étendre dans la partie arrière **31,** perpendiculairement par rapport à la plaque de fixation **39,** pour former un caisson à l'arrière du haut-parleur de grave **20.** Le caisson est maintenu ouvert par une grille **34** disposée en regard du haut-parleur de grave **20.** Une grille **34** est, par exemple, formée d'un treillis réalisé en plastique ou en métal comportant des ouvertures de quelques millimètres.

Afin de rendre l'appui-tête **10a-10f** plus confortable, une mousse arrière **33** peut être rajoutée. Cependant, celle-ci doit être à cellules ouvertes ou semi-ouvertes. Par exemple une mousse arrière **33** en polyuréthane avec une densité comprise entre 8 et 60 kg/m³.

A titre d'exemple, la figure 9 illustre une mousse arrière **33** recouvrant toute la partie arrière de la structure centrale **13** sur une épaisseur comprise entre 2 et 15 cm La mousse arrière **33** est découpée de sorte à venir s'encastrer directement sur la plaque de fixation **39** de l'appui-tête **10a-10f** et à épouser l'arrière des haut-parleur **20-21** en laissant le moins de zone de vide possible. La mousse est fixée contre la plaque de fixation **39** et les haut-parleurs **20-21** par le biais d'une colle, de vis ou tout autre moyen de fixation.

En variante, tel qu'illustré sur la figure 11, la mousse arrière **33** peut combler l'espace formé par le caisson situé à l'arrière du haut-parleur de grave **20.**

Une telle disposition rend les haut-parleurs de grave **20** monopolaires en champ proche et dipolaires en champ lointain, c'est-à-dire que l'onde sonore émise par les haut-parleurs de grave **20** ne se propage que vers l'avant, en direction de l'utilisateur, et vers l'arrière. Ainsi, les voisins latéraux ne perçoivent pas le son. De plus, les voisins avant et arrière ne perçoivent également pas le son car l'onde s'atténue rapidement avec la distance. En effet, le comportement dipolaire du haut-parleur de grave **20** en champ lointain provoque un effet de filtrage passe-haut.

Les haut-parleurs medium-aigu **21** sont associés à une partie arrière **32** fermée. Une partie arrière **32** fermée est obtenue grâce à une paroi étanche au son, typiquement réalisée en bois ou en plastique et/ou une mousse à cellules fermées, c'est-à-dire de densité supérieure à 60 kg/m³. De manière classique, la mousse à cellules fermées peut être réalisé en polyéthylène ou en polystyrène.

Par exemple, la figure 9 illustre une paroi arrière **32** fermée formée par un caisson rigide englobant le moteur magnétique de l'au moins un haut-parleurs medium-aigu **21.** Le caisson rigide peut être recouvert par la mousse arrière **33** lorsque l'appui-tête **10a-10f** est formé uniquement d'une structure centrale **13.**

En variante, tel qu'illustré sur les figures 10 et 11, lorsque les haut-parleurs medium-aigu **21** sont disposés sur les bords latéraux **14,** le caisson rigide peut être recouvert d'un autre type de mousse **35,** empêchant la propagation du son, typiquement une mousse dense à cellules fermées.

Une telle disposition rend les haut-parleurs medium-aigu **21** monodirectionnels, c'est-à-dire que l'onde sonore émise par les haut-parleurs médium-aigu **21** ne se propage que dans une seule direction, la direction de la tête **15** de l'utilisateur. Ainsi, les voisins latéraux, avant et arrière ne perçoivent pas le son.

La partie avant **30** des haut-parleurs **20-21** est recouverte par une première couche de mousse avant **16.** La mousse avant **16** peut présenter différentes caractéristiques en fonction des applications et des besoins de confort et de soutien recherchés.

Pour laisser passer efficacement le son provenant des haut-parleurs **20-21,** il peut être nécessaires d'utiliser des évidements **18a-18b** lorsqu'il est requis d'utiliser des mousses avec des faibles propriétés de transmissions acoustiques. En particulier, il est préférable d'utiliser des évidements **18b** de la taille des haut-parleurs **21** pour obtenir la meilleure transmission acoustique possible.

En variante, lorsque la taille des haut-parleurs **20** est importante, il peut être préférable d'utiliser des évidements plus petits que la taille des haut-parleurs **20** pour ne pas perdre en confort.

Tel qu'illustré sur la figure 12, une première couche de mousse avant **16,** plus rigide et dense que la mousse arrière **33** s'étend sur une épaisseur comprise entre 2 et 7 cm. De préférence, la première couche de mousse avant **16** est percée d'évidements **18a-18b** afin d'améliorer la diffusion du son vers l'utilisateur. Dans le cas des haut-parleurs medium-aigu **21,** l'évidement **18b** est ménagée en regard des haut-parleurs medium-aigu **21** car ceux-ci ont une taille suffisamment petite pour que l'ouverture ne diminue pas le confort de l'utilisateur.

En revanche, compte tenu du diamètre et du positionnement des haut-parleurs de grave **20,** il est préférable de ne pas ménager une ouverture directement en regard du haut-parleur de grave **20** car celui-ci est placé au plus proche de la tête **15** de l'utilisateur. En effet, lorsqu'un évidement est ménagé derrière la tête **15** de l'utilisateur, la surface permettant d'apporter un soutien au niveau de la tête **15** de l'utilisateur est réduite et l'utilisateur peut perdre en confort. Pour ce faire, les évidements **18a** sont préférablement réalisés en périphérie des haut-parleurs de grave **20** et ont un diamètre compris entre 2 et 8 cm.

Une seconde couche de mousse avant **17** recouvre la première couche de mousse avant **16** ainsi que les haut-parleurs **20-21.** Cette seconde couche de mousse avant **17** est plus souple et plus fine que la première couche de mousse avant **16,** typiquement de 1 à 3 cm d'épaisseur. Une telle mousse avant **17** transmet les ondes sonores générées par les haut-parleurs **20**-21 avec peu ou pas d'atténuation. Cette couche de mousse avant **17** est principalement rajoutée pour des raisons de confort pour l'utilisateur, par exemple pour limiter les vibrations émises par les haut-parleurs **20-21,** et d'esthétisme, car la mousse avant **17** permet de rentre la surface de l'appui-tête **10a-10f** homogène et la présence des évidements **18a-18b** imperceptible. A titre d'exemple, la seconde couche de mousse avant **17** est une mousse réalisée en polyuréthane à mémoire de forme et la première couche de mousse avant **16** est réalisée en fibres de polyester, par exemple en polytéréphtalate d'éthylène.

Pour des questions de confort et/ou d'esthétisme, les mousses avant **17** et/ou arrière **33-34** sont recouvertes d'un tissu (non représenté sur les figures), de préférence léger et perméable au son.

Selon un mode de réalisation non représenté sur les figures, l'appui-tête **10a-10f** est montée sur un siège grâce à un mécanisme de charnières ou de tiges métalliques aptes à coulisser verticalement à travers des guides percés au niveau de la partie supérieure du dossier du siège. De manière alternative, l'appui-tête **10a-10f** et le dossier sont formés d'un seul tenant.

Pour conclure, l'invention permet d'obtenir un appui-tête sonorisé avec une restitution sonore efficace en basses-fréquences tout en minimisant l'impact sonore environnemental.

## Revendications

1. Appui-tête sonorisé (10a-10e) comportant :
- au moins un haut-parleur médium/aigu (21), associé à une partie arrière fermée comportant une paroi pleine et/ou une mousse à cellules fermées de sorte que ledit au moins un haut-parleur médium/aigu (21) soit monodirectionnel; et,
- au moins un haut-parleur de grave (20) **caractérisé en ce qu'**il est associé à une partie arrière ouverte (31), comportant une grille (34) et/ou une mousse arrière (33), à cellules ouvertes ou semi-ouvertes, présentant une densité comprise entre 8 et 60 kg/m3 , de sorte que ledit au moins un haut-parleur de grave (20) soit bidirectionnel.

2. Appui-tête sonorisé selon la revendication 1, ***dans lequel*** l'appui-tête (10a-10e) comporte :
- une zone centrale (11a-11e) destinée à recevoir l'appui de l'arrière de la tête (15) d'un utilisateur ; ladite zone centrale (11a-11e) présentant une partie avant (30), comportant ledit au moins un haut-parleur de grave (20) recouvert par au moins une couche de mousse avant (16, 17) ; et
- deux zones latérales (12a-12f) disposées de part et d'autre de ladite zone centrale (11a-11e) ; chaque zone latérale (12a-12f) intégrant ledit au moins un haut-parleur médium/aigu (21).

3. Appui-tête sonorisé selon la revendication 2, ***dans lequel*** lesdites zones latérales (12a-12f) sont montées de part et d'autre de ladite zone centrale (11a-11e) aux moyens de charnières (22) de sorte que lesdits zones latérales (12a-12f) soient orientables angulairement par rapport à ladite zone centrale (11a-11e).

4. Appui-tête sonorisé selon l'une des revendications revendication 1 à 3, ***dans lequel*** l'appui-tête (10a-10e) intègre un réseau d'au moins deux haut-parleurs médium/aigu (21) espacés d'une distance comprise entre 0,5 et 10 cm, de sorte à obtenir des interférences constructives entre lesdits au moins deux haut-parleurs médium/aigu (21) et former une onde sonore sensiblement cylindrique parvenant jusqu'à la tête (15) de l'utilisateur.

5. Appui-tête sonorisé selon l'une des revendications 1 à 4, ***dans lequel*** ledit au moins un haut-parleur médium/aigu (21) est recouvert par au moins une couche de mousse avant (16, 17).

6. Appui-tête sonorisé selon la revendication 2 ou 5, ***dans lequel*** ladite au moins une couche de mousse avant (16, 17) comportent :
- une couche de mousse primaire (16) présentant des évidements (18a-18b) ménagés en regard dudit au moins un haut-parleur (20-21) ; et
- une couche de mousse secondaire (17), disposée au-dessus de ladite couche de mousse primaire (16).

7. Appui-tête sonorisé selon la revendication 2 et 6, ***dans lequel*** ladite couche de mousse primaire (16) présente des évidements (18a) disposés en périphérie dudit au moins un haut-parleur de grave (20).

8. Appui-tête sonorisé selon l'une des revendications 1 à 7, ***dans lequel*** ledit au moins un haut-parleur de grave (20) est commandé pour diffuser des sons dans une plage de fréquence dont la borne supérieure est comprise entre 80 et 800 Hz et ledit au moins un haut-parleur médium/aigu (21) de chaque zone latérale (12a-12f) est commandé pour diffuser des sons dans une plage de fréquence dont la borne inférieure est inférieure ou égale à ladite borne supérieure.

9. Siège de voiture, de train, d'avion, ou siège multimédia comportant :
- une assise ;
- un dossier ;
- un appui-tête sonorisé (10a-10e), selon l'une des revendications 1 à 8, monté sur ledit dossier ; et
- un organe de répartition du signal audio entre ledit au moins un haut-parleur de grave (20) et ledit au moins un haut-parleur médium/aigu (21) dudit appui-tête sonorisé (10a-10e).

10. Siège selon la revendication 9, ***dans lequel,*** ledit appui-tête sonorisé (10a-10e) comportant plusieurs haut-parleurs médium/aigu (21), ledit organe de répartition du signal audio est configuré pour appliquer un délai temporel entre au moins deux haut-parleurs médium/aigu de chaque zone latérale (12a-12f) de sorte à orienter le son global dans la direction des oreilles dudit utilisateur.

## Patentansprüche

1. Kopfstütze (10a-10e) mit Soundsystem, die Folgendes umfasst:
- mindestens einen Mittel-/Hochtonlautsprecher (21), der mit einem geschlossenen hinteren Teil verbunden ist, das eine feste Wand und/oder einen Schaumstoff mit geschlossenen Zellen umfasst, so dass der mindestens eine Mittel-/Hochtonlautsprecher (21) in eine Richtung ausgelegt ist; und,
- mindestens einen Tieftonlautsprecher (20), **dadurch gekennzeichnet, dass** er mit einem offenen hinteren Teil (31) verbunden ist, das ein Gitter (34) und/oder einen hinteren Schaumstoff (33) mit offenen oder halboffenen Zellen umfasst, der eine Dichte zwischen 8 und 60 kg/m³ aufweist, so dass der mindestens eine Tieftonlautsprecher (20) in zwei Richtungen ausgelegt ist.

2. Kopfstütze (10a-10e) mit Soundsystem nach Anspruch 1, ***wobei*** die Kopfstütze (10a-10e) Folgendes umfasst:
- einen zentralen Bereich (11a-11e), der dazu bestimmt ist, die Stütze des Hinterkopfes (15) eines Benutzers aufzunehmen; wobei der zentrale Bereich (11a-11e) einen vorderen Teil (30) aufweist, der den mindestens einen Tieftonlautsprecher (20) umfasst, der vorne von mindestens einer Schaumstoffschicht (16, 17) bedeckt ist; und
- zwei seitliche Bereiche (12a-12f), die auf beiden Seiten des zentralen Bereichs (11a-11e) angeordnet sind, wobei in jedem seitlichen Bereich (12a-12f) der mindestens eine Mittel-/Hochtonlautsprecher (21) eingebaut ist.

3. Kopfstütze (10a-10e) mit Soundsystem nach Anspruch 2, ***wobei*** die seitlichen Bereiche (12a-12f) auf beiden Seiten des zentralen Bereichs (11a-11e) mit Hilfe von Scharnieren (22) so angebracht sind, dass die seitlichen Bereiche (12a-12f) in Bezug auf den zentralen Bereich (11a-11e) im Winkel verstellbar sind.

4. Kopfstütze mit Soundsystem nach einem der Ansprüche 1 bis 3, ***wobei*** in der Kopfstütze (10a-10e) ein Netz aus mindestens zwei Mittel-/Hochtonlautsprechern (21) integriert ist, die in einem Abstand zwischen 0,5 und 10 cm voneinander entfernt sind, so dass konstruktive Interferenzen zwischen den mindestens zwei Mittel-/Hochtonlautsprechern (21) erzielt werden und eine im Wesentlichen zylindrische Schallwelle erzeugt wird, die bis zum Kopf (15) des Benutzers gelangt.

5. Kopfstütze mit Soundsystem nach einem der Ansprüche 1 bis 4, ***wobei*** der mindestens eine Mittel-/Hochtonlautsprecher (21) vorne mit mindestens einer Schaumstoffschicht (16, 17) bedeckt ist.

6. Kopfstütze mit Soundsystem nach einem der Ansprüche 2 oder 5, ***wobei*** die mindestens eine vordere Schaumstoffschicht (16, 17) Folgendes umfasst:
- Eine primäre Schaumstoffschicht (16) mit Aussparungen (18a-18b), die gegenüber dem mindestens einen Lautsprecher (20-21) angeordnet sind; und
- eine sekundäre Schaumstoffschicht (17), die über der primären Schaumstoffschicht (16) angeordnet ist.

7. Kopfstütze mit Soundsystem nach einem der Ansprüche 2 und 6, ***wobei*** die primäre Schaumstoffschicht (16) Aussparungen (18a) aufweist, die am Umfang des mindestens einen Tieftonlautsprechers (20) angeordnet sind.

8. Kopfstütze mit Soundsystem nach einem der Ansprüche 1 bis 7, ***wobei*** der mindestens eine Tieftonlautsprecher (20) so gesteuert wird, dass er Töne in einem Frequenzbereich erzeugt, dessen Obergrenze zwischen 80 und 800 Hz liegt, und der mindestens eine Mittel-/Hochtonlautsprecher (21) in jedem seitlichen Bereich (12a-12f) so gesteuert wird, dass er Töne in einem Frequenzbereich abgibt, dessen Untergrenze kleiner oder gleich der Obergrenze ist.

9. Auto-, Zug-, Flugzeug- oder Multimediasitz mit:
- einer Sitzfläche;
- einer Rückenlehne;
- einer Kopfstütze mit Soundsystem (10a-10e) nach einem der Ansprüche 1 bis 8, die an der Rückenlehne angebracht ist; und
- einem Organ zur Verteilung des Audiosignals zwischen dem mindestens einen Tieftonlautsprecher (20) und dem mindestens einen Mittel-/Hochtonlautsprecher (21) der Kopfstütze mit Soundsystem (10a-10e).

10. Sitz nach Anspruch 9, ***wobei*** die Kopfstütze mit Soundsystem (10a-10e) mehrere Mittel-/Hochtonlautsprecher (21) umfasst und das Audiosignalverteilungsorgan so konfiguriert ist, dass eine Zeitverzögerung zwischen mindestens zwei Mittel-/Hochtonlautsprechern jedes seitlichen Bereichs (12a-12f) entsteht, damt der gesamte Sound in Richtung der Ohren des Benutzers gelenkt wird.

## Claims

1. A sound-equipped headrest (10a-10e) comprising:
- at least one mid-range/tweeter (21), associated with a closed rear part comprising a solid wall and/or a closed cell foam, so that said at least one mid-range/tweeter (21) is mono-directional; and
- at least one woofer (20) **characterized in that** it's associated with an open back (31), comprising a grid (34) and/or a rear foam (33), with open or semi-open cells, having a density between 8 and 60 kg/m³, so that said at least one woofer (20) is bi-directional.

2. The sound-equipped headrest according to claim 1, *wherein* the headrest (10a-10e) comprises:
- a central area (11a-11e) for receiving support from the back of a user's head (15); said central area (11a-11e) having a front portion (30), comprising said at least one woofer (20) covered by at least one front foam layer (16, 17); and
- two lateral zones (12a-12f) arranged on either side of said central zone (11a-11e); each lateral zone (12a-12f) integrating said at least one mid-range/tweeter (21).

3. The sound-equipped headrest, according to claim 2, *wherein* said lateral zones (12a-12f) are mounted on either side of said central zone (11a-11e) by means of hinges (22) so that said lateral zones (12a-12f) are angularly orientable with respect to said central zone (11a-11e).

4. The sound-equipped headrest according to any of claims 1 to 3, *wherein* the headrest (10a-10e) incorporates a network of at least two mid-range/tweeters (21) spaced between 0.5 and 10 cm apart so as to achieve constructive interference between said at least two mid-range/tweeters (21) and form a substantially cylindrical sound wave reaching the user's head (15).

5. The sound-equipped headrest according to any of claims 1 to 4, *wherein* said at least one mid-range/tweeter (21) is covered by at least one front foam layer (16, 17).

6. The sound-equipped headrest according to claim 2 or 5, *wherein* said at least one front foam layer (16, 17) comprises:
- a primary foam layer (16) having recesses (18a-18b) facing said at least one speaker (20-21), and
- a secondary foam layer (17) placed on top of said primary foam layer (16).

7. The sound-equipped headrest according to claims 2 and 6, *wherein* said primary foam layer (16) has recesses (18a) arranged at the periphery of said at least one woofer (20).

8. The sound-equipped headrest according to one of claims 1 to 7, *wherein* said at least one woofer (20) is actuated to radiate sounds in a frequency range whose upper bound is between 80 and 800 Hz, and said at least one mid-range/tweeter (21) of each lateral zone (12a- 12f) is actuated to radiate sounds in a frequency range whose lower bound is equal to or lower than said upper bound.

9. A car seat, train seat, plane seat, or multimedia seat including:
- a seat;
- a backrest;
- a sound-equipped headrest (10a-10e), according to any of claims 1 to 8, mounted on said backrest; and
- a mechanism for distributing the audio signal between said at least one woofer (20) and said at least one mid-range/tweeter (21) of said sound-equipped headrest (10a-10e).

10. The seat according to claim 9, *wherein* said headrest equipped with speakers (10a-10e) having a plurality of mid-range/tweeters (21), said audio signal distribution mechanism is configured to apply a time delay between at least two mid-range/tweeters of each lateral zone (12a-12f) so as to direct the overall sound in the direction of the ears of said user.
